# EUROPÄISCHE PATENTANMELDUNG

(11) **EP 2 360 025 A2**
(43) Veröffentlichungstag der Anmeldung: **24.08.2011**
(21) Anmeldenummer: 11151342.0
(22) Anmeldetag: 19.01.2011
(51) Int. Cl.: B44C 1/10, B44C 5/04, B44F 9/04

(54) **Abdeckbahn zur Imitation von Naturstein**

(30) Priorität: 23.02.2010 DE 202010000242 U
(71) Anmelder: Oxiegen GmbH, 33175 Bad Lippspringe (DE)
(72) Erfinder: Watermann, Heinfried, 33175 Bad Lippspringe (DE)
(74) Vertreter: Hanewinkel, Lorenz

(57) **Zusammenfassung**

Die Erfindung bezieht sich auf eine Abdeckbahn zur Verkleidung einer Oberfläche in der Art, dass ein optischer Eindruck einer Steinfläche entsteht, bestehend aus einer Trägerbahn (3) und einer darauf befindlichen Oberflächenschicht (2), wobei die Oberflächenschicht (2) aus einem fein granuliertem Naturstein besteht, der mit einem granuliertem Schmelzkleber vermischt und thermisch auf die Trägerbahn (3) aufgebracht ist.

## Beschreibung

Die Erfindung bezieht sich auf eine Abdeckbahn zur Verkleidung einer Oberfläche in der Art, dass ein optischer Eindruck einer Steinfläche entsteht, bestehend aus einer Trägerbahn und einer darauf befindlichen Oberflächenschicht.

Abdeckbahnen werden zum Schutz von Oberflächen, zum Abdichten von Bauteilen gegen Feuchtigkeit im Baubereich und zur Dekoration von Oberflächen in vielfältiger Form eingesetzt.
In der Patentschrift DE 197 53 816 C2 ist ein Verfahren zum Beschichten von Objekten unter Erzielung der optischen Wirkung eines natürlichen Malachitstein beschrieben, in dem ein gemahlener Malachitstein in einen Klarlack dispergiert wird und mit diesem Lack das Objekt dann lackiert wird. Es ist keine Trägerbahn für das Malachitmehl vorgesehen, die auf ein Objekt aufgebracht wird.
In der Gebrauchsmusterschrift DE 202 04 592 U1 ist ein flächiges Dichtmaterial mit einer Kunststoffbahn beschrieben, auf der ein mineralisches Streugut anhaftet. Dieses Dichtmaterial ist zum Abdichten gegen Wasser oder Feuchtigkeit im Baubereich vorgesehen. Die optische Wirkung des Dichtmaterials ist nicht von Belang, da bei der Verarbeitung des Dichtmaterials noch eine zusätzliche Dekorschicht aufgebracht wird.

Es ist die Aufgabe der Erfindung eine Abdeckbahn anzugeben, die für die Dekoration von verschiedensten Oberflächen geeignet ist und den optischen Eindruck eines Natursteins vermittelt.

Diese Aufgabe wird mit den Merkmalen des Anspruchs 1 gelöst.
Vorteilhafte Ausgestaltungen sind in den abhängigen Ansprüchen angegeben.

Die Abdeckbahn zeichnet sich durch die Verwendung von fein granuliertem Naturstein aus, der mit einem Schmelzkleber vermischt thermisch auf eine Trägerbahn aufgebracht ist. Dabei kann der Naturstein jede Form von Stein sein, also etwa Granit, Marmor oder Sandstein.

Da der granulierte Naturstein auf einer Trägerbahn aufgebracht ist, können beliebige Objekte mit dieser Abdeckbahn überzogen werden. Es können also im Baubereich Wände damit belegt werden oder Möbel mit einer Oberfläche von Naturstein versehen werden.

Die Trägerbahn ist in Form von Bändern oder Streifen vorgesehen, die nahtlos aneinander gefügt werden können. Damit ergibt sich eine geschlossene Oberfläche, die optisch wie eine Steinplatte wirkt. Eine mit Granit versehene Abdeckbahn kann auf einer Küchenarbeitsplatte wie eine Granitplatte wirken.

Um den optischen Eindruck weiter zu verändern, kann der granulierte Naturstein mit Farbstoffen versetzt sein. So kann auch ein marmorierender Effekt erzielt werden. Der Eindruck einer natürlichen Steinoberfläche wird weiter verstärkt, wenn die Oberfläche der Oberflächenschicht geschliffen oder poliert ist. Dies kann mit üblichen Verfahren erfolgen.

Die Abdeckbahn lässt sich einfach mit einer Kunststofffolie als Trägerbahn herstellen. Die Trägerbahn kann aber auch aus Papier bestehen. Damit lässt sich dann eine Steintapete herstellen, die zur Dekoration von Räumen dienen kann.

Für weitere Anforderungen kann die Trägerbahn auch aus einem Vlies herstellt sein.

Die Abdeckbahn kann mit üblichen Klebeverfahren auf Oberflächen verklebt werden. So ist beispielsweise eine Möglichkeit im Baubereich, die Abdeckbahn mit mineralischem Kleber auf Wänden zu verkleben. Wenn eine Kunststofffolie als Trägerbahn verwendet wird, können dabei auch die Abdichtung und die Dekoration einer Nasszelle in einem gemeinsamen Schritt erfolgen.

Die Verarbeitung der Abdeckbahn wird weiter vereinfacht, wenn die Trägerbahn rückseitig eine Klebeschicht besitzt, mit der sie auf das zu dekorierende Objekt aufgeklebt wird. So kann die Abdeckbahn etwa direkt auf eine Holzoberfläche aufgeklebt werden und dieser das Aussehen einer Steinplatte verleihen.

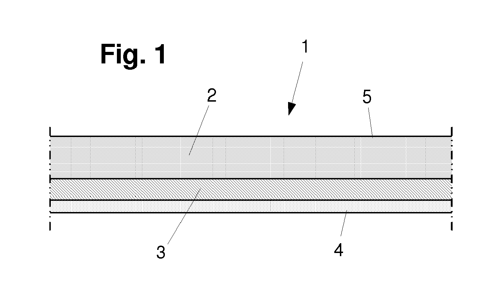

Eine Ausführungsform der Abdeckbahn ist in der Figur 1 dargestellt. Die Abdeckbahn 1 ist auf der Trägerbahn 3 aufgebaut, die aus Kunststofffolie, Vlies, Papier oder ähnlichem bestehen kann.
Auf der Trägerbahn 3 ist die Oberflächenschicht 2 aufgebracht. Sie besteht aus fein granuliertem Naturstein und ist mit einem Schmelzkleber vermischt, über den die Oberflächenschicht 2 auf der Trägerbahn 2 thermisch verklebt ist. Die äußere Oberfläche 5 der Oberflächenschicht 2 kann geschliffen oder poliert sein. Die Oberfläche 5 bestimmt den optischen Eindruck der Abdeckbahn.
Unter der Trägerbahn 3 befindet sich eine Klebeschicht 4, über die die Abdeckbahn 1 auf einer Oberfläche eines Objektes aufgeklebt wird.

## Patentansprüche

1. Abdeckbahn zur Verkleidung einer Oberfläche in der Art, dass ein optischer Eindruck einer Steinfläche entsteht, bestehend aus einer Trägerbahn (3) und einer darauf befindlichen Oberflächenschicht (2),
**dadurch gekennzeichnet, dass**
die Oberflächenschicht (2) aus einem fein granuliertem Naturstein besteht, der mit einem granuliertem Schmelzkleber vermischt und thermisch auf die Trägerbahn (3) aufgebracht ist.

2. Abdeckbahn nach Anspruch 1, **dadurch gekennzeichnet, dass** sie Form von Bändern oder Streifen aufgeteilt ist.

3. Abdeckbahn nach Anspruch 1, **dadurch gekennzeichnet, dass** die Oberfläche (5) der Oberflächenschicht (2) geschliffen oder poliert ist.

4. Abdeckbahn nach Anspruch 1, **dadurch gekennzeichnet, dass** der granulierte Naturstein mit einem oder mehreren Farbstoffen versetzt ist.

5. Abdeckbahn nach Anspruch 1, **dadurch gekennzeichnet, dass** die Trägerbahn (3) eine Kunststofffolie ist.

6. Abdeckbahn nach Anspruch 1, **dadurch gekennzeichnet, dass** die Trägerbahn (3) aus Papier besteht.

7. Abdeckbahn nach Anspruch 1, **dadurch gekennzeichnet, dass** die Trägerbahn (3) aus einem Vlies besteht.

8. Abdeckbahn nach Anspruch 1, **dadurch gekennzeichnet, dass** die Trägerbahn (3) rückseitig eine Klebeschicht (4) besitzt.
